# EUROPÄISCHE PATENTSCHRIFT

(11) **EP 3 212 401 B1**
(45) Veröffentlichungstag und Bekanntmachung des Hinweises auf die Patenterteilung: **08.12.2021**
(21) Anmeldenummer: 15788328.1
(22) Anmeldetag: 29.10.2015
(51) Int. Cl.: B32B 27/32, B65D 65/40

(54) **TRANSPARENTE POLYOLEFINFOLIE**
TRANSPARENT POLYOLEFIN FILM
FILM EN POLYOLÉFINE TRANSPARENT

(30) Priorität: 30.10.2014 DE 102014015929
(43) Veröffentlichungstag der Anmeldung: 06.09.2017
(73) Patentinhaber: Treofan Germany GmbH & Co. KG, 66539 Neunkirchen (DE)
(72) Erfinder: HÜTT, Detlef, 66265 Heusweiler (DE); ROTH, Mathias, 66482 Zweibrücken (DE)
(74) Vertreter: Mai Besier
(86) Internationale Anmeldenummer: PCT/EP2015/002163
(87) Internationale Veröffentlichungsnummer: WO 2016/066268

(56) Entgegenhaltungen:
- EP-A1- 0 538 747
- EP-A1- 0 765 742
- EP-A2- 0 775 574
- EP-A2- 0 781 652
- WO-A1-2011/092001
- US-A- 5 500 265

## Beschreibung

Die vorliegende Erfindung betrifft eine peelfähige, transparente, Polyolefin-Mehrschichtfolie aus mindestens drei Schichten. Die Erfindung betrifft ferner ein Verfahren zur Herstellung der peelfähigen Mehrschichtfolie sowie ihre Verwendung.

Polyolefinfolien finden als Verpackungsfolien breite Anwendung. Der Erfolg dieser Materialien beruht auf den guten optischen und mechanischen Eigenschaften sowie auf den guten Siegeleigenschaften. Siegelfähige Folien besitzen eine Deckschicht aus einem Polymeren, das einen niedrigeren Kristallitschmelzpunkt besitzt als das Polymere der Basisschicht der Folie. Zum Siegeln werden die Folienlagen übereinandergelegt und 10 bis 20°C unter den Kristallitschmelzpunkt erwärmt, d.h. die Deckschichten werden nicht vollständig aufgeschmolzen, bilden aber eine Siegelnaht von hoher Festigkeit.

Die Siegelnähte haben in vielen Fällen eine höhere mechanische Festigkeit als die Folien selbst, so daß beim Öffnen einer versiegelten Folienpackung diese nicht nur in der Siegelnaht aufgerissen wird. Häufig pflanzt sich der Riß in der Folie selbst fort, wodurch die Folie unkontrolliert weiter reißt. Aus diesem Grund werden anstelle von siegelfähigen Rohstoffen auch sogenannte peelfähige Deckschichten auf Folienoberflächen aufgebracht. Es erfolgt dann eine Siegelung der peelfähigen Deckschichten gegeneinander. Diese Siegelung bietet eine ausreichende Festigkeit, aber gleichzeitig auch die Möglichkeit, die Siegelnaht wieder kontrolliert zu öffnen, ohne die gesiegelte Folie zu zerstören. Diese Öffnung der Peelnaht erfolgt dann idealerweise nur in der Peelschicht.

Peelfähige Rohstoffe sind im Stand der Technik bekannt. Beispielsweise beschreibt das Produktdatenblatt "Novolen VP 9201" ein olefinisches Polymeres, welches zur Herstellung von peelbaren, coextrudierten Siegelschichten auf Polypropylenfolien geeignet ist. Die siegelfähigen Peelschichten sind glänzend bis seidenmatt und werden vorwiegend auf pigmentierten/opaken Basisschichten verwendet, da die Kompressibilität der vakuolenhaltigen Basisschicht zu guten Siegel- und Peeleigenschaften beiträgt.

Grundsätzlich ist die Festigkeit einer Siegelnaht auch von der Temperatur abhängig, bei der die Siegelung erfolgt. Dies ist bei normalen siegelfähigen Folien unproblematisch, da in dieser Anwendung eine ausreichend feste Siegelnaht durch die Einhaltung einer Mindesttemperatur beim Siegeln erzielt wird. Höhere Temperaturen beim Siegeln führen zu höheren Siegelnahtfestigkeiten, die aber keinen Nachteil darstellen. Demgegenüber ist bei der Siegelung peelfähiger Deckschichten die genaue Einhaltung eines sehr engen Temperaturbereichs bei der Siegelung erforderlich, da eine zu hohe Festigkeit der Siegelnaht die Peelfähigkeit beeinträchtigt. Andererseits muß dennoch eine ausreichende Festigkeit der Siegelnaht gewährleistet werden, damit die Verpackung ausreichend schützt. Die Verarbeitung der peelfähigen Folien zu einer Verpackung ist daher kritischer und erfordert eine sehr gute Kontrolle der Temperatur bei der die Siegelung erfolgt. Zusätzlich wirken sich Schwankungen im Aufbau oder der Qualität der Folie, z.B. Dickenungleichmäßigkeiten der Deckschichten, direkt auf die Qualität der Siegelnaht aus und können zu einer zu geringen oder zu hohen Festigkeit der Siegelnaht führen. Die Qualität der Verpackung ist dann ebenfalls nicht gleichbleibend. Diese Probleme sind bei transparenten Peelfolien insgesamt wesentlich kritischer, da keine vakuolenhaltige Basisschicht die Effekte abmildert.

Die US-A-4,666,778 beschreibt transparente, peelfähige Folien mit einer guten Siegelnahtfestigkeit und mit einer niedrigen Trübung. Die peelfähige Deckschicht besteht aus einem Polymergemisch aus ethylenischen Polymeren oder ethylenischen Copolymeren mit geringen Mengen von Propylenpolymeren und Butylenpolymeren. Die Transparenz der Folien ist für manche Anwendungszwecke ausreichend, aber grundsätzlich verbesserungsbedürftig.

Die EP-A-0 538 747 beschreibt biaxial orientierte Polypropylenfolien mit einer matten Deckschicht, Die Deckschicht besteht aus Propylenco- und/oder -terpolymeren und einem HDPE. Die Folien zeichnen sich durch einen geringen Glanz und eine hohe Trübung aus, wodurch das matte Erscheinungsbild gewährleistet wird.

Die US 5,500,265 beschreibt ebenfalls eine peelfähige Folie. EP2528737 offenbart eine transparente Mehrschichtfolie mit mindestens einer matten Aussenlage, welche HDPE oder MDPE als inkompatible Polymere zum PP-ter/copolymer enthält, und die Rauheit Rz mindestens 2, bis 8, µm beträgt.

Diesen bekannten peelfähigen Folien haftet der Nachteil an, daß eine peelfähige Deckschicht inhärent eine höhere Trübung und einen niedrigeren Glanz hat als eine siegelfähige Deckschicht. Da im Allgemeinen die peelfähige Deckschicht beidseitig aufgebracht werden muß, um eine Siegelung von Peelschicht gegen Peelschicht zu ermöglichen, haben die bekannten Peelfolien eine zu geringe Transparenz und zu wenig Glanz. Es genügt die Peelschicht nur einseitig aufzubringen, wenn bei der Herstellung der Verpackung diese Peel-Seite der Folie gegen sich selbst gesiegelt wird. Bei Verpackungen, die eine sogenannte "Over-Lap" Siegelnaht (A/B-Siegelung) erfordern, stellt dieser Folien-Aufbau keine Lösung dar, da die Siegelung der Peelschicht gegen die gegenüberliegende Siegelschicht zu sehr hohen Siegelnahtfestigkeiten führt und somit das kontrollierte Öffnen der Verpackung schwierig ist.

Es ist im Stand der Technik auch bekannt, daß die hohen Anforderungen an den Glanz bei hochwertigen Polypropylenfolien im Allgemeinen nur durch Deckschichten aus Propylenhomopolymer erfüllt werden. Diese Homopolymer-Deckschichten sind jedoch nicht siegelfähig.

Es besteht ein Bedarf an hochwertigen Verpackungsfolien, welche diesen vielfältigen Anforderungen besser entsprechen, als die bisher im Stand der Technik bekannten peelfähigen transparenten Folien. Es ist daher Aufgabe der vorliegenden Erfindung eine Folie zur Verfügung zu stellen, die einfach und verfahrenssicher zu einer peelfähigen Verpackung verarbeitet werden kann. Die Folie soll auch für Verpackungen mit einer "over-lap" Siegelnaht geeignet sein, d.h. die geforderte Siegelnahtfestigkeit und die gute Peelfähigkeit sollen bei einer Siegelung der einander gegenüberliegenden Deckschichten gegeben sein.

Die Aufgabe der vorliegenden Erfindung bestand daher darin, eine transparente, peelfähige Folie zur Verfügung zu stellen, welche ein breites Verarbeitungsfenster bietet. Die Peelfähigkeit der gesiegelten Folie soll wenig kritisch von der Siegeltemperatur oder von Schwankungen der Folienqualität abhängen, d.h. die Siegelung soll in einem breiten Temperaturbereich zu einer ausreichenden Festigkeit der Siegelnaht einerseits und guter Peelfähigkeit andererseits führen. Insbesondere soll die Festigkeit dieser Siegelnaht über einen Siegeltemperaturbereich von vorzugsweise 30°C in einem Bereich von 0,4 bis 1,5 N/15mm liegen, so daß sich eine Verpackung ohne Zerstörung der Folienstruktur oder ungerichtete Rißfortpflanzung öffnen läßt. Gleichzeitig dürfen die übrigen Eigenschaften, wie z.B. die Bedruckbarkeit der Folie, nicht negativ beeinflußt werden. Wünschenswert ist zusätzlich eine gute Transparenz und mindestens einseitig ein guter Glanz.

Die der Erfindung zugrundeliegende Aufgabe wird gelöst durch peelfähige, transparente Polyolefin-Mehrschichtfolie aus einer transparenten Basisschicht und einer erste Deckschicht I und einer zweiten siegelfähigen Deckschicht II, wobei
(I) die erste Deckschicht I eine Mischung aus
   (a) mindestens einem Propylen-Copolymeren I und/oder Propylen-Terpolymeren I aus Propylen, Ethylen und/oder Butylen-Einheiten und
   (b) mindestens ein Ethylen-Butylen-Copolymer enthält und
   die Oberfläche dieser Deckschicht I eine Rauheit von 0,1 bis <2µm bei einem cut-off von 0,25mm, gemessen nach ISO4287, aufweist und
(II) die zweite siegelfähige Deckschicht II eine Mischung aus
   (a) einem Propylenhomopolymeren und
   (b) einem Propylen-Copolymeren II mit einer Siegelanspringtemperatur von 105 bis 135°C enthält,
   wobei die siegelfähige Deckschicht II mindestens 70 Gew.-%, bezogen auf das Gewicht der Deckschicht II, des Propylenhomopolymeren enthält.

Überraschenderweise ermöglicht die Modifizierung der Propylenhomopolymer-Deckschicht II mit einer vergleichsweise geringen Mengen eines siegelfähigen Propylen-Copolymeren II eine Siegelung dieser Deckschicht II gegen die peelfähige Deckschicht I, wenn als Zusatz ein Propylen-Copolymer II mit einer Siegelanspringtemperatur von 105 bis 135°C ausgewählt wird. Überraschenderweise werden durch den Zusatz dieses Propylen-Copolymeren II die Transparenz und der Glanz der Folie auf der Oberfläche der Deckschicht II nur unwesentlich beeinträchtig, so daß die Folie insgesamt die hohen Anforderungen hinsichtlich der Optik gut erfüllt. Die Deckschicht I kann gegen die Deckschicht II innerhalb eines breiten Temperaturbereichs gesiegelt werden. Innerhalb dieses Temperaturbereichs werden ausreichend feste Siegelnähte erzielt. Gleichzeitig läßt sich die Siegelnaht (I/II) kontrolliert öffnen, so daß eine peelfähige Verpackung vergleichsweise einfach aus der Folie hergestellt werden kann. Damit bietet die Folie eine Kombination von Eigenschaften, welche so an einer Folie bisher nicht realisiert werden konnten.

Die transparente Basisschicht der erfindungsgemäßen Mehrschichtfolie enthält im Wesentlichen ein Polyolefin, vorzugsweise ein Propylenpolymer, sowie gegebenfalls weitere Additive in jeweils wirksamen Mengen. Im Allgemeinen enthält die Basisschicht mindestens 70 bis 100 Gew.-%, vorzugsweise 85 bis 99 Gew.-%, insbesondere 95 bis 99 Gew.-%, des Polyolefins, vorzugsweise Propylenhomopolymer, bezogen auf das Gewicht der Basisschicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.- %, Propyleneinheiten und besitzen einen Schmelzpunkt von 150°C oder höher, vorzugsweise 155 bis 170°C, und im allgemeinen einen Schmelzflußindex von 0,5 bis 12 g/10 min, vorzugsweise 2 bis 8 g/10 min, bei 230°C und einer Kraft von 2,16kg (ISO 1133-1). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit C4-C8--Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Basisschicht dar, wobei isotaktisches Propylenhomopolymer besonders bevorzugt ist. Die angegebenen Gewichtsprozente beziehen sich auf das jeweilige Polymere.

Des Weiteren ist eine Mischung aus den genannten Propylenhomo- und Propylen-Copolymeren und/oder Propylen-Terpolymeren geeignet. Gegebenenfalls können auch anderen Polyolefinen aus Monomeren mit 2 bis 6 C-Atomen in der Basisschicht enthalten sein. Andere Polyolefine sind beispielsweise Polyethylene, insbesondere HDPE, LDPE, VLDPE und LLDPE. Besonders bevorzugt enthält die Basisschicht mindestens 90Gew.-% Propylenhomopolymere und höchstens 10Gew.-%, vorzugsweise mindestens 95Gew.-% Propylenhomopolymere und höchstens 5 Gew.-% der Co- und/oder Terpolymeren und/oder der anderen Polymeren.

Eine transparente Basisschicht ist selbstverständlich im Wesentlichen frei (<1Gew.-%, bezogen auf das Gewicht der Basisschicht) von Pigmenten und vakuoleninitierenden Teilchen, welche im Allgemeinen für weiß-opake Folien eingesetzt werden.

Die erfindungsgemäße Folie umfaßt neben der transparenten Basisschicht eine erste peelfähige Deckschicht I und eine zweite siegelfähige Deckschicht II. Eine Deckschicht ist im Sinne der vorliegenden Erfindung eine außenliegende Schicht, so daß die äußere Oberfläche der jeweiligen Deckschicht eine der beiden Folienoberflächen bildet. Vorzugsweise handelt es sich bei den Deckschichten I und II um mit der Basisschicht zusammen co-extrudierte Schichten.

Die peelfähige Deckschicht I enthält als erfindungswesentliche Bestandteile ein Propylen-Co- und/oder Propylen-Terpolymer I aus Propylen, Ethylen und/oder Butylen-Einheiten und ein Ethylen-Butylen-Copolymer. Im Allgemeinen enthält die peelfähige Deckschicht I mindestens 70 bis 99 Gew.-%, vorzugsweise 75 bis 97 Gew.-%, insbesondere 80 bis 95 Gew.-% des Propylen-Co- und/oder Propylen-Terpolymeren I und 1 bis 30 Gew.-%, vorzugsweise 3 bis 25 Gew.-%, insbesondere 5 bis 20 Gew.-% Ethylen-Butylen-Copolymer, jeweils bezogen auf das Gewicht der peelfähigen Deckschicht I, sowie gegebenenfalls zusätzlich übliche Additive in jeweils wirksamen Mengen, wobei in diesen Ausführungsformen der Anteil an Co- und/oder Terpolymer zu Gunsten der Additive entsprechend reduziert wird.

Geeignete Propylen-Co- oder Propylen-Terpolymere I sind aus Ethylen, Propylen oder Butylen-Einheiten aufgebaut, wobei Terpolymere I drei verschiedene Monomere enthalten. Die Zusammensetzung der Co- oder Terpolymeren I aus den jeweiligen Monomeren kann innerhalb weiter Grenzen variieren. Im Allgemeinen enthalten die Co- und/oder Terpolymeren über 50 Gew.-%, vorzugsweise über 60 bis <100 Gew.-% Propylen-Einheiten, d.h. es sind Propylen-Co- und/oder PropylenTerpolymere mit Ethylen- und/oder Butylen-Einheiten als Comonomere. Der Anteil an Comonomeren ist statistisch verteilt, weshalb diese Polymeren auch als statistische Copolymere oder statistische Terpolymere bezeichnet werden.

Propylen Copolymere I enthalten im Allgemeinen mindestens 65 Gew.-%, vorzugsweise 70 bis 97 Gew.-% Propylen-Einheiten und höchstens 35 Gew.-%, vorzugsweise 3 bis 30 Gew.-% Ethylen- oder Butylen-Einheiten als Comonomer. Propylen Terpolymere I enthalten im Allgemeinen 65 bis 96 Gew.-%, vorzugsweise 72 bis 93 Gew.-% Propylen-Einheiten, und 3 bis 34 Gew.-%, vorzugsweise 5 bis 26 Gew.- % Ethylen-Einheiten und 1 bis 10 Gew.-%, vorzugsweise 2 bis 8 Gew.-% Butylen-Einheiten. Die vorstehend beschriebenen Co- und Terpolymeren I weisen im allgemeinen einen Schmelzflußindex von 1,5 bis 30 g/10 min, vorzugsweise von 3 bis 15 g/10 min, auf; wobei die Schmelzflußindices bei 230°C und einer Kraft von 2,16kg (ISO 1133-1) gemessen werden. Der Schmelzpunkt der Co- oder Terpolymeren I liegt im Bereich von 120 bis 140°C.

Gegebenenfalls können die vorstehend genannten Propylen-Co- und Propylen-Terpolymeren I untereinander gemischt werden. Hierbei können die Anteile von Co- zu Terpolymer in beliebigen Grenzen variieren. Diese Mischung wird dann in den vorstehend, für die jeweiligen Co- und Terpolymeren I beschriebenen Mengen, in der peelfähigen Deckschicht eingesetzt.

Die zweite erfindungswesentliche Komponente der peelfähigen Deckschicht I ist ein Ethylen-Butylen-Copolymer. Die Deckschicht I aus der Mischung der Propylen-Co- und/oder Propylen-Terpolymeren I mit dem Ethylen-Butylen-Copolymer bildet keine signifikante Oberflächenrauheit. Die Oberflächenrauheit Rz der Deckschicht I gemessen nach ISO4287 der ersten Deckschicht I liegt im Allgemeinen in einem Bereich von 0,1 bis <2µm, vorzugsweise 0,2 bis 1,5 µm, insbesondere 0,3 bis 1,0µm bei einem Cut-off von 0,25mm.

Das Ethylen-Butylen-Copolymer enthält, bezogen auf das Copolymer, einen Anteil von <50 Gew.-%, vorzugsweise 10 bis 45 Gew.-%, Butylen, vorzugsweise unverzweigtes 1-Buten, als Comonomer. Das Ethylen-Butylen-Copolymer weißt im Allgemeinen einen Schmelzflußindex (MFI) von größer 0,5 bis 15 g/10 min, vorzugsweise 1,0 bis 10 g/10min, insbesondere von 1,0 bis 5g/10min (gemessen bei 2,16kg/190°C) auf. Der maximale Schmelzpunkt des Ethylen-Butylen-Copolymers, gemessen mit DSC (Maximum der Schmelzkurve, Aufheizgeschwindigkeit 20 °C/min), beträgt 50 bis 110°C, vorzugsweise 60 bis 90°C. Bevorzugt ist der so bestimmte maximale Schmelzpunkt <100°C, bevorzugt <90°C. Die Dichte, gemessen bei 23°C nach ISO 1183, liegt im Bereich von >0,82 bis 0,92g/cm³, vorzugsweise im Bereich von 0,85 bis 0,90 g/cm³. Es handelt sich also um ein VLDPE oder um ein ULDPE, vorzugsweise um ein ULDPE. Bevorzugt und typischerweise zeigt das Ethylen-Butylen-Copolymer im DSC einen sehr breiten kontinuierlichen Schmelzbereich beginnend an einer unteren Grenze von mindestens 30°C, vorzugsweise mindestens 35°C, bis zu einer oberen Grenze von 100°C, vorzugsweise von 90°C, wobei dieser Schmelzbereich 90% des Materials einschließt, basierend auf der Fläche der DSC Kurve (Kurvenintegral). Derartige DSC Kurven sind typisch für UDLPEs. Es ist auch möglich, ein Ethylene-Butylene Copolymer durch peroxidischen Abbau z.B. eines primären, eng verteilten Metallocen Ethylene-Butylene Copolymer vorzubehandeln. Ein peroxidischer Abbau erhöht die Schmelzflussrate und verbreitert den Aufschmelzebereich. Auf diese Weise kann auch mit z.B. einem etwas höherdichten VLDPE der breite Aufschmelzbereich eines ULDPEs deutlich geringerer Dichte erhalten werden. Ein derartiger peroxidischer Abbau von Polymeren ist eine Maßnahme, die dem Fachmann wohlbekannt ist.

Vorzugsweise handelt es sich bei dem Ethylen/Butylen-Copolymeren um ein mit mindestens einem metallorganischem single-site Katalysator hergestelltes Polymer, bevorzugt um ein mit mindestens einem Metallocene hergestelltes Polymer. Vorzugsweise und im Hinblick die möglichst geringe Rauigkeit ist das Ethylene/Butylene-Copolymere 'kompatibel' mit dem Copolymeren oder Terpolymeren I der Deckschicht I. Im Sinne der vorliegenden Erfindung bedeutet kompatibel, das das Ethylen/Butylen-Copolymere mit isotaktischem Polypropylen im amorphen Zustand bzw. bei Raumtemperatur in der amorphen Region mischbar ist. Für eine Kompatibilität ist es nicht erforderlich, dass das Ethylene Copolymere vollständig und homogen mit dem Co- oder Terpolymeren I mischbar ist. Bevorzugt liegt keine homogene, vollständige Mischbarkeit vor. Vielmehr zeigt die Deckschicht I bevorzugt und typischweise zwei getrennte Phasen (im TEM, nach Färbung mit Ruthenium-tetraoxid, vgl. Nwabunma, Kyu et al. (ed.), Polyolefins Blends, John Wiley & Sons, 2008, Hoboken/NJ, p. 226-241). Die Struktur der Mischung zeigt in elektronenmikroskopischen Aufnahmen, dass das isotaktische Polypropylen nur in der amorphen Phase zwischen den kristallinen Polypropylen Lamellen mit dem Ethylene-Buten-Copolymeren mischbar ist, d.h. keine vollständige Phasentrennung vorliegt. Darin unterscheidet sich die erfindungsgemäße Mischung der Deckschicht I von den im Stand der Technik bekannten Mischungen aus inkompatiblen Polymeren, z.B. Propylenpolymer mit inkompatiblen HDPEs, welche gerade erhöhte Oberflächenrauheiten erzeugen. Typischerweise und bevorzugt ragen bei den Mischungen der vorliegenden Erfindung kristalline Lamellen aus isotaktischem Polypropylen in der Art von Dendriten in die amorphe Ethylen/Butylene-Copolymerreiche Phase hinein (im TEM Bild, Feinstruktur, vlg. Nwabunma, p. 227, Fig. 9.2). Somit liegt bei einer kompatiblen Polymermischung eine geringe Oberflächenspannung zwischen den Polymerphasen und eine gute interfacialen Adhesion der Phasen, mit geringer oder keiner Coaleszenz, vor. Kompatibilität im vorliegendem Kontext bedeutet auch, dass, anders als inkompatible Polymere, beide Polymerphasen in der Schmelze vollständig mischbar sind (oberhalb des UCST; Nachweis mit Neutronenstreuung, SANS, vgl. Nwabunma, ibid. p. 226, Weimann et al., Macromolecules 30, 3650 (1997)).

In einer besonders bevorzugten Ausführung enthält die Deckschicht I keine LDPE, MDPE oder HDPE Beimischungen, die im Stand der Technik als mit PropylenPolymere inkompatiblen Polyethylenen häufig zur Herstellung siegelfähiger, aber matter Deckschichten mit erhöhter Rauheit herangezogen werden. Ebenso enthält vorzugsweise weder die Deckschicht I noch die Deckschicht II ein Poly-1-Buten.

Besonders geeignet ist beispielsweise ein Ethylen/Butylene-Copolymer mit dem Handelsnamen der TAFMER A-4085 S von Mitsui Chemicals, Inc, welches einen maximalen Schmelzpunkt von ca. 86°C, einen Peak-Schmelzpunkt von ca. 76°C und einen MFI von 3,6g/10min hat. Die Dichte gemessen bei 23°C nach ISO 1183, liegt im Bereich von >0,85 bis 0,92g/cm³, typischerweise beträgt sie ungefähr 0,88 g/cm³. Vorzugsweise enthält die Deckschicht I keine Beimischungen in Form von festen Füllstoffen ausgewählt aus der Gruppe von festen Partikeln und/oder Fasern, insbesondere keine Beimischungen in Form von festen Füllstoffen aus anorganischem Material.

Die Propylen-Co- und/oder Terpolymeren I werden mit dem Ethylen-Butylen-Copolymer gemischt. Diese Mischung kann als mechanische Mischung der Granulatkörner oder als Blend vorliegen. Die Mischung der Komponenten zeigt im Allgemeinen in einem mittels DSC aufgenommenen Schmelzdiagramm zwei separate Schmelzpeaks. Der erste Schmelzpeak liegt vorzugsweise im Bereich von 105 bis 135°C, der zweite Schmelzpeak liegt im Bereich von 120 bis 140°C.

Die Dicke der peelfähigen Deckschicht I wird unabhängig von der Dicke der anderen Schichten gewählt und liegt bevorzugt im Bereich von 0,5 bis 1,5 µm, insbesondere 0,6 bis 1,2 µm, vorzugsweise 0,7 bis 1 µm.

Die Deckschicht I enthält gegebenfalls zusätzlich übliche Additive in jeweils wirksamen Mengen, im Allgemeinen Neutralisationsmittel und Stabilisator. Bevorzugt werden auch Antiblockmittel und/ oder Gleitmittel zugesetzt. Art und Menge dieser Additive werden später im Einzelnen ausführlich beschrieben.

Die Deckschicht II I enthält als erfindungswesentliche Bestandteile im Wesentlichen Propylenhomopolymer und ein Propylen-Copolymer II mit einer erhöhten Siegelanspringtemperatur.

Im Rahmen der vorliegenden Erfindung wurde überraschend gefunden, daß die Folie alle vorstehend genannten Anforderungen hinsichtlich Transparenz, Glanz, Siegelbereich, Siegelnahtfestigkeit und Peelfähigkeit erfüllt, wenn die zweite Deckschicht II zusätzlich zu dem nicht-siegelfähigen Propylenhomopolymer mindestens ein Propylen-Copolymer mit einer Siegelanspringtemperatur von 105 bis 135°C, vorzugsweise 110 bis 125°C, insbesondere 110 bis 120°C enthält. Im allgemeinen enthält die zweite Deckschicht mindestens 70 bis 98 Gew.-%, vorzugsweise 80 bis 95 Gew.-%, insbesondere 85 bis 95 Gew.-% Propylenhomopolymer und 2 bis 30 Gew.-%, vorzugsweise 5 bis 20 Gew.-%, insbesondere 5 bis 15 Gew.-% des Propylen-Copolymer II, jeweils bezogen auf das Gewicht der zweiten Deckschicht II.

Das Propylenhomopolymer der Deckschicht II enthält im Allgemeinen 95 bis 100 Gew.-%, insbesondere 98 bis 100 Gew.-%, Propyleneinheiten und besitzen einen Schmelzpunkt von 155°C oder höher, vorzugsweise 158 bis 170°C, und im allgemeinen einen Schmelzflußindex von 0,5 bis 12 g/10 min, vorzugsweise 2 bis 8 g/10 min, bei 230°C und einer Kraft von 2,16kg (ISO 1133-1). Propylenhomopolymer sind im Allgemeinen isotaktische Polymer mit einem ataktischen Anteil von 15 Gew.-% und weniger.

Geeignete Propylen-Copolymere II mit der besagten Siegelanspringtemperatur sind vorzugsweise aus Propylen und Butylen-Einheiten aufgebaut. Im Allgemeinen enthalten die Copolymeren mindestens 60 Gew.-% Propylen-Einheiten, d.h es sind Propylencopolymere mit höchstens 40 Gew.-% Butylen-Einheiten als Comonomere (C₃C₄-Copolymere). Der Anteil an Comonomer ist statistisch verteilt, weshalb diese Polymeren auch als statistische Copolymere bezeichnet werden.Vorzugsweise handelt es sich um mit einem Ziegler Natta Katalysator hergestellte Copolymere. Die C₃C₄-Copolymeren II enthalten vorzugsweise mindestens 65 Gew.-%, insbesondere 70 bis 97 Gew.-% Propylen und vorzugsweise höchstens 35 Gew.-%, insbesondere 3 bis 30 Gew.-% Butylen als Comonomer. Der Schmelzindex der C3C4-Copolymeren beträgt im Allgemeinen 0,1 bis 20 g/10min (230°C, 2,16kg), vorzugsweise 3 bis 15 g/10min. Der Schmelzpunkt liegt im Allgemeinen in einem Bereich 130 bis 146°C, vorzugsweise 135 bis 145°C. Die Vicat-A Temperatur dieser Propylene Copolymere II liegt vorzugsweise >100°C. Die Ausführungsformen des Films mit diesen C₃C₄-Copolymeren zeichnen sich durch eine besonders gute Peelfähigkeit gegenüber der Deckschicht I aus.

Im Rahmen der vorliegenden Erfindung wurde gefunden, daß die Einarbeitung von Propylen-Ethylen-Copolymeren oder von Propylen-Ethylen-Butylen-Terpolymeren mit einer Siegelanspringtemperatur von unter 105°C in das Propylenhomopolymere der Deckschicht II die Aufgabe der vorliegenden Erfindung nicht löst. Es wurde gefunden, dass diese Polymeren in geringen Mengen zu keiner Siegelung oder nur zu sehr geringen Siegelnahtfestigkeiten führen. Durch Erhöhung des Anteils kann zwar die Siegelnahtfestigkeit erhöht werden, aber gleichzeitig werden die Peelfähigkeit und die Transparenz der Folie stark beeinträchtigt. Mit diesen Polymeren konnte somit keine Mischung für die Deckschicht II gefunden bzw. keine Folie dargestellt werden, welche alle Anforderungen erfüllt. Polymere mit einer Siegelanspringtemperatur von über 135°C erwiesen sich auch als ungeeignet, da keine Siegelnahtfestigkeit gegenüber der Deckschicht I erzielt werden konnte. Es ist daher erfindungswesentlich, daß die Deckschicht die beschriebene Mischung aus dem Propylenhomolymeren und dem Propylen-Copolymeren II mit einer Siegelanspringtemperatur von 105 bis 135°C enthält.

Unter der Siegelanspringtemperatur des Propylen-Copolymeren II, vorzugsweise C₃C₄-Copolymer II, wird diejenige Siegelanspringtemperatur verstanden, die an einer Referenzfolie gemessen wird. Diese Referenzfolie ist eine biaxial verstreckte Folie, die aus einer Basisschicht aus Propylenhomopolymer und einer ersten Deckschicht aufgebaut ist. Die erste Deckschicht ist zu 100 Gew.-% aus dem zu bestimmenden Propylen-Copolymeren II, vorzugsweise C₃C₄-Copolymeren, aufgebaut. Die erste Deckschicht hat eine Dicke von ca. 1,2µm, so daß der gemessene Wert von den üblichen geringfügigen Dickenschwankungen unabhängig ist. Eine zweite Deckschicht kann optional auf der gegenüberliegenden Seite der Basisschicht aufgebracht sein, da diese die Siegelanspringtemperatur der ersten Deckschicht nicht beeinflusst. Die erste Deckschicht der Referenzfolie aus C3C4-Copolymeren sollte aber keine Additive wie Antiblockmittel oder Gleitmittel enthalten, welche die Siegelanspringtemperatur beeinflussen könnten. Die Siegelanspringtemperatur wird durch Siegelung dieser Referenzfolie ermittelt, wobei die erste Deckschicht aus dem zu prüfenden Polymeren gegen sich selbst gesiegelt wird. Bei der Siegelung und der Messung wird so verfahren wie es bei den Meßmethoden im Einzelnen beschrieben ist.

Besonders vorteilhaft werden Propylen-Butylen-Copolymere eingesetzt, welche eine Siegelanspringtemperatur von 115 bis 120°C und einen Schmelzpunkt von 138 bis 142°C haben. Bevorzugt weisen diese Propylen-Butylen-Copolymere eine Schmelzeenthalpie ΔH von 40 bis 80J/g, insbesondere von 50 bis 75 J/g auf. Ein geeignetes kommerzielles Copolymer, welches diese Kriterien erfüllen ist beispielsweise Adsyl 3C30FHP.

Der Anteil dieses Propylen-Butylen-Copolymeren liegt vorzugsweise in einem Bereich von 5 bis 15 Gew.-%, bezogen auf das Gewicht der Deckschicht II.

Die Deckschicht II hat im Allgemeinen eine Dicke von 0,1 bis 2 µm, vorzugsweise 0,3 bis 1,2 µm, insbesondere 0,5 bis 0,8 µm.

Es ist im Stand der Technik bekannt, daß eine Deckschicht aus isotaktischem Proylenhomopolymer nicht gegen sich selbst und auch nicht gegen übliche siegelfähige Deckschichten gesiegelt werden kann. Überraschenderweise wurde gefunden, daß die Modifikation einer Homopolymer-Deckschicht mit dem beschriebenen Propylen-Copolymeren II, vorzugsweise C₃C₄-Copolymer II, der Homopolymer-Deckschicht eine Siegelfähigkeit verleiht, welche eine ausreichende Siegelnahtfestigkeit gegenüber der peelfähigen Deckschicht I ermöglicht. Damit können gesiegelte Verpackungen hergestellt werden, die einen ausreichenden Schutz für das Packgut bieten. Es wurde ursprünglich erwartet, daß eine solche Siegelfähigkeit einer Deckschicht auf Basis von Propylenhomopolymer, wenn überhaupt, nur mit besonders niedrig siegelnden Mischpolymerisaten in der Homopolymer-Deckschicht erreicht werden könnten. Im Vergleich zu anderen Zusammensetzungen konnte jedoch nur die erfindungsgemäße spezielle Kombination der beiden Deckschichten I und II gefunden werden, welche so gegeneinander gesiegelt werden können, daß einerseits die geforderte Siegelnahtfestigkeit und gleichzeitig die Peelbarkeit der Siegelnaht erzielt wird. Dabei ist es mit der erfindungsgemäßen Kombination aus der Deckschicht I und II sogar möglich diese Siegelnahtfestigkeit einerseits und die Peelfähigkeit andererseits auch noch bei gewissen Schwankungen der Siegeltemperatur zu erreichen. Damit ist die Herstellung der peelfähigen Verpackung wesentlich verbessert und der Ausschuss an Verpackungen, die den Qualitätsanforderungen nicht entsprechen, deutlich reduziert. Die Anforderungen bezüglich Glanz und Optik werden zusätzlich auch noch sehr gut erfüllt. Die erfindungsgemäße Folie bietet somit eine Vielzahl von geforderten Eigenschaften, die in dieser Kombination bei Folien nach dem Stand der Technik noch nicht dargestellt werden konnten.

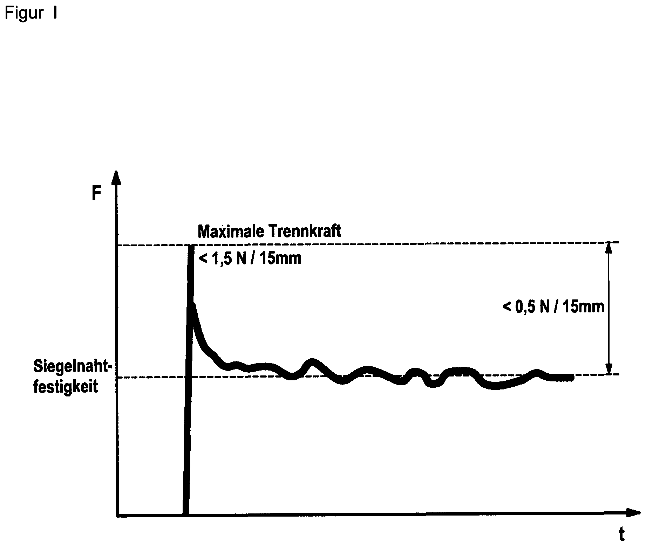

Peelfähigkeit bedeutet im Sinne der vorliegenden Erfindung qualitativ, daß die Siegelnaht kontrolliert und gleichmäßig aufgezogen werden kann, um die versiegelten Folienlagen voneinander zu trennen. Beim Peelen ist nach Überwindung der Trennkraft zu Beginn des Peelvorgangs eine Trennung der Naht durch Aufziehen mit einer möglichst gleichmäßigen Kraft möglich. Die anfängliche (maximale) Trennkraft beträgt vorzugsweise höchstens 1,5 N/15mm (obere Linie Fig.1). Die anschließend erforderliche Trennkraft zum gleichmäßig Aufziehen der Naht ist niedriger als die anfängliche Trennkraft und entspricht der Siegelnahfestigkeit (untere Linie Fig.1). Vorzugsweise liegen anfängliche Trennkraft und anschließende Trennkraft (Siegelnahfestigkeit) um nicht mehr als 0,5N/15mm auseinander. Figur 1 veranschaulicht diese Zusammenhänge.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 10 bis 100 µm, wobei 15 bis 50 µm, insbesondere 20 bis 40 µm, bevorzugt sind.

Bevorzugte Ausführungsformen der Folie sind dreischichtig aufgebaut und bestehen aus der Basisschicht und den beidseitigen Deckschichten I und II. Die Basisschicht ist im Sinne der vorliegenden Erfindung diejenige Schicht, welche mehr als 50 % der Gesamtdicke der Folie ausmacht. Ihre Dicke ergibt sich aus der Differenz von Gesamtdicke und der Dicke der aufgebrachten Deckschicht/en und kann daher analog der Gesamtdicke innerhalb weiter Grenzen variieren. Die Deckschichten I und II bilden die äußersten Schichten der Folie. Gegebenenfalls können zwischen der jeweiligen Deckschicht oder den Deckschichten zusätzlich Zwischenschichten angebracht sein.

Um bestimmte Eigenschaften der erfindungsgemäßen Polypropylenfolie noch weiter zu verbessern, können sowohl die Basisschicht als auch die beiden Deckschichten übliche Additive in einer jeweils wirksamen Menge enthalten, vorzugsweise Kohlenwasserstoffharz und/oder Antistatika und/oder Antiblockmittel und/oder Gleitmittel und/oder Stabilisatoren und/oder Neutralisationsmittel, die mit den Polymeren der Basisschicht und der Deckschicht/en verträglich sind, mit Ausnahme der in der Regel unverträglichen Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit Alpha-Hydroxy-(C1-C4)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,7 Gew.-%. Für die vorliegende Erfindung ist es insbesondere bevorzugt, der/den Deckschichten tertiäre aliphatische Amine in einer Menge von 0,4 bis 0,6 Gew.-% zuzusetzen. ^{®}Armostat 300 ist ein besonders bevorzugtes Antistatikum.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm²/s.

Als Stabilisatoren können die üblichen stabilisierend wirkenden Verbindungen für Ethylen-, Propylen- und andere -Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Siliciumdioxid und Calciumcarbonat, sowie organische Polymerisate . Die wirksame Menge an Antiblockmittel liegt im Bereich von 0,1 bis 7 Gew.-%, vorzugsweise 0,5 bis 5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht behandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gemeinsam und gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt. Es hat sich als besonders günstig erwiesen, die Abzugswalze oder -walzen, durch die die ausgepreßte Folie auch abgekühlt und verfestigt wird, bei einer Temperatur von 10 bis 90°C zu halten, bevorzugt 20 bis 60°C.

Vorzugsweise wird die so erhaltene Folie dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Die Längsstreckung erfolgt im Allgemeinen bei einer Temperatur von weniger als 140°C, vorzugsweise im Bereich von 115 bis 135°C und die Querstreckung bei einer Temperatur größer 140°C, vorzugsweise bei 145 bis 160°C.Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10s lang bei einer Temperatur von 110 bis 150°C gehalten wird. Anschließend wird die Folie in üblicher Weise mit einer Aufwickeleinrichtung aufgewickelt.

Gegebenenfalls kann/können wie oben erwähnt nach der biaxialen Streckung eine oder beide Oberfläche/n der Folie nach einer der bekannten Methoden plasma-, corona- oder flammbehandelt werden. Die Behandlungsintensitäten liegen im üblichen Rahmen, wobei 38 bis 45 mN/m bevorzugt sind.

Für die Flammbehandlung mit polarisierter Flamme (vgl. US-A-4,622,237) wird eine elektrische Gleichspannung zwischen einem Brenner (negativer Pol) und einer Kühlwalze angelegt wird. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Die erfindungsgemäße Mehrschichtfolie läßt sich in einem breiten Temperatur-Bereich von beispielsweise 120 bis 150°C siegeln und weißt eine Siegelnahtfestigkeit im Bereich von 0,4 bis 1,5 N/15mm auf. Gleichzeitig läßt sich die Folie hervorragend peelen. Beim Peelen, d.h. beim Öffnen der Verpackung kommt es nicht zum unkontrollierten Einreißen oder Weiterreißen der Folie.

Es wurde gefunden, daß die peelfähige Deckschicht I überraschend gut gegen die modifizierte Propylenhomopolymer-Deckschicht II gesiegelt werden kann, obwohl Deckschichten aus Propylenhompolymer an sich gar nicht siegelfähig sind. Es werden in einem breiten Temperaturbereich von 120 bis 150°C Siegelnahtfestigkeiten von 0,4 bis 1,5N/15mm erreicht. Überraschenderweise steigt auch bei relativ hohen Siegeltemperaturen von über 140°C die Siegelnahtfestigkeiten nicht weiter an, so dass eine Festigkeiten von 1,5N/15mm nicht überschritten wird und eine gute Peelfähigkeit auch nach Siegelung bei hohen Temperaturen gegeben ist.

Dabei ist gleichzeitig die gewünschte Peelfähigkeit gegeben, so dass die Verpackungen aus der erfindungsgemäßen Folie leicht und kontrolliert geöffnet werden können. Es genügt ein geringer Zusatz des Propylen-Copolymeren II in der Polypropylenhomopolymer-Deckschicht II, so dass Glanz und Transparenz der Folie insgesamt nur unwesentlich beeinträchtigt werden. Der Glanz der Folie auf der Oberläche der Deckschicht II liegt im Allgemeinen in einem Bereich von 100 bis 125 Glanzeinheiten und die Transparenz der Folie in einem Bereich von 1,5 bis 2,5% . Es kann somit eine Folie zur Verfügung gestellt werden, welche alle Anforderung hinsichtlich Glanz, Transparenz, Siegelnahtfestigkeit und Peelfähigkeit gut erfüllt. Die Aufgabe ist somit durch einen Folienaufbau erfüllt, der keine besonderen zusätzlichen Verfahrensschritte wie Coating, Laminierung oder ähnliches erfordert, um eine peelfähige Verpackung herzustellen.

Die Erfindung wird nunmehr durch die nachfolgenden Beispiele erläutert.

### Beispiel

Nach dem Coextrusionsverfahren wurde aus einer Breitschlitzdüse bei einer Extrusionstemperatur von 260°C eine dreischichtige Folie extrudiert. Diese Vorfolie wurde zunächst auf einer Kühlwalze abgezogen und abgekühlt. Anschließend wurde die Vorfolie in Längs- und Querrichtung orientiert und abschließend fixiert. Die Oberfläche der ersten Deckschicht I wurde mittels Corona zur Erhöhung der Oberflächenspannung vorbehandelt. Die dreischichtige Folie hatte einen Schichtaufbau erste Deckschicht I / Basisschicht / zweite Deckschicht II. Die einzelnen Schichten der Folie hatten die folgende Zusammensetzung. Die Angaben in Gew.-% beziehen sich auf das Gewicht der jeweiligen Schicht.

### Basisschicht B:

99,75 Gew.-%
   Propylenhomopolymerisat (PP) mit einem n-heptanlöslichen Anteil von 4,5 Gew.-% (bezogen auf 100 % PP) und einem Schmelzpunkt von 165°C und einem Schmelzflußindex von 3,2 g/10 min bei 230°C und 2,16kg Belastung (ISO 1133-1);
0,10 Gew.-%
   Erucasäureamid über Masterbatch Borealis HC 102 BF
0,15 Gew.-%
   N,N-bis(2-hydroxyethyl)-(C10-C20)-alkylamin (^{®}Armostat 300).

### Die Deckschicht I (Peelschicht)

90 Gew.-%
   eines statistischen Ethylen-Propylen-Butylen-Terpolymeren der Fa.Lyondell Basell (Adsyl 5C39F),
10 Gew.-%
   eines Ethylen-Butylen-Copolymeren der Fa. Mitsui (Tafmer A 4085 S) mit einem Schmelzpunkt von 67°C und einem Schmelzflußindex MFR (bei 190°C, 2,16kg Belastung ) von 3.6 g/10 min.

### Die Deckschicht II (Glanzseite)

90 Gew.-%
   Propylenhomopolymerisat (PP) mit einem n-heptanlöslichen Anteil von 4,5 Gew.-% (bezogen auf 100 % PP) und einem Schmelzpunkt von 165°C; und einem Schmelzflußindex von 3,2 g/10 min bei 230°C und 2,16kg Belastung (ISO 1133-1);
10 Gew.-%
   eines Propylen-Butylen-Copolymeren der Fa. Lyondell Basell (Adsyl 3C 30 FHP)

Alle Schichten enthielten zur Stabilisierung 0,12 Gew.-% Pentaerythrityl-Tetrakis-4-(3,5-ditertiärbutyl-4-hydroxyphenyl)-propionat (^{®}Irganox 1010) sowie als Neutralisationsmittel 0,06 Gew.-% Calciumstearat.

Bei der Herstellung der Folie wurden im Einzelnen die folgenden Bedingungen gewählt:
Extrusion:
   Extrusionstemperatur 260°C
Längsstreckung:
   Streckwalze T = 120°C
   Längsstreckung um den Faktor 5
   Querstreckung: Aufheizfelder T = 165°C
   Streckfelder T = 158°C
   Querstreckung um den Faktor 9
Fixierung:
   Temperatur T = 140°C
Coronabehandlung Deckschicht II:
   Spannung: 10 000 V
   Frequenz: 10 000 Hz

Die so hergestellte Mehrschichtfolie wies direkt nach der Herstellung eine Oberflächenspannung von 40 bis 41 mN/m auf (Deckschicht II). Die Folie war ca. 20 µm dick, wobei die Dicke der Deckschicht I etwa 0,7 µm und die Dicke der Deckschicht II etwa 0,5 µm betrug.

### Vergleichsbeispiel 1

Es wurde eine Folie wie in Beispiel 1 beschrieben hergestellt. Im Unterschied zu Beispiel 1 bestanden beide Deckschichten I und II aus dem Terpolymer von Lyondell Basell mit der Handelsbezeichnung Adsyl 5C39 F. Die übrige Zusammensetzung sowie die Verfahrensbedingungen wurden gegenüber Beispiel 1 nicht geändert.

### Vergleichsbeispiel 2

Vergleichsbeispiel 2 wurde wie in Beispiel 1 beschrieben hergestellt. Im Unterschied zu Beispiel 1 bestand die Deckschicht A aus einem herkömmlichen Terpolymer von Lyondell Basell mit der Handelsbezeichnung Adsyl 5C 39 F, während für die zweite Deckschicht C eine Polypropylen Homopolymer von Lyondell Basell mit der Bezeichnung Moplen HP 528 J verwendet wurde. Die übrige Zusammensetzung sowie die Verfahrensbedingungen wurden gegenüber Beispiel 1 nicht geändert.

### Vergleichsbeispiel 3

Vergleichsbeispiel 3 wurde wie in Beispiel 1 beschrieben hergestellt. Im Unterschied zu Beispiel 1 enthielten beide Deckschichten ein herkömmliches Copolymer von Ineos mit der Handelsbezeichnung Eltex P KS 414. Die übrige Zusammensetzung sowie die Verfahrensbedingungen wurden gegenüber Beispiel 1 nicht geändert.

Zur Charakterisierung der Rohstoffe und der Folien wurden die folgenden Meßmethoden benutzt:
Schmelzflußindex
   Der Schmelzflußindex der Propylen-Polymeren wurde nach ISO 1133-1 bei 2,16kg Belastung und 230°C gemessen. Der Schmelzflußindex des Ethylen-Butylen-Copolymeren wurde nach ISO 1133-1 bei 2,16kg Belastung und 190°C gemessen.
Schmelzpunkte
   DSC-Messung, Maxima der Schmelzkurve, Aufheizgeschwindigkeit 20 °K/min.

### Glanz

Der Glanz wurde nach ISO 2813 bestimmt. Gemessen wurde der Reflektorwert als optische Kenngröße für die Oberfläche einer Folie. Der Einstrahlwinkel wurde mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und wird in Glanzeinheiten und zusammen mit dem Einstrahlwinkel angegeben.

### Siegelnahtfestigkeit

Zur Bestimmung der Siegelnahtfestigkeit der Folie werden zwei 15 mm breite Folienstreifen geschnitten und mit den jeweils zu prüfenden Deckschichten aufeinander gelegt und bei einer Temperatur in einem Bereich von 110 bis 150°C, einer Siegelzeit von 0,5 s und einem Siegeldruck von 1,5 N/cm² (Gerät: Brugger Typ NDS, einseitig beheizte Siegelbacke) versiegelt. Die Siegelnahtfestigkeit, d.h. die zur Trennung der Prüfstreifen erforderliche Kraft, wird mit einer Zugprüfmaschine bei einer Abzugsgeschwindigkeit von 200 mm/min bestimmt, wobei die Siegelnahtebene einen rechten Winkel mit der Zugrichtung bildet.

### Bestimmung der Siegelanspringtemperatur

Es werden zwei Folienstreifen geschnitten und mit den jeweils zu prüfenden Deckschichten aufeinander gelegt. Mit dem Siegelgerät HSG/ETK der Fa. Brugger werden heissgesiegelte Proben hergestellt, indem die aufeinandergelegten Streifen bei unterschiedlichen Temperaturen mit Hilfe zweier beheizter Siegelbacken (20 mm x 100 mm) bei einem Siegeldruck von 10 N/cm² und einer Siegeldauer von 0,5 s gesiegelt werden. Aus den gesiegelten Proben werden Prüfstreifen von 15 mm Breite geschnitten. Die Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur ist die Temperatur, bei der eine Siegelnahtfestigkeit von mindestens 1,0 N/15 mm erreicht wird.

### Peelfähigkeit

Peelfähigkeit bedeutet vorzugsweise, dass bei der Trennung der gesiegelten Prüfstreifen (Siegelzeit 0,5 s und Siegeldruck 1,5 N/cm²) die maximale, anfängliche Trennkraft höchstens 1,5 N/15mm beträgt und die Trennkraft beim weiteren Trennvorgang um maximal 0,5N/15mm (gegenüber dem genannten Maximalwert) abfällt.

### Trübung

Die Trübung wird in Anlehnung an ASTM-D 1003-77 gemessen.

In der nachstehenden Tabelle sind die Eigenschaften der Mehrschichtfolien der Beispiele zusammengefaßt.

**Tabelle 1**

| | **Deckschicht** | **Schichtdicke** | **Peelfähigkeit** | **Trübung** | **Glanz** | **Siegelung DS I gegen DS II bei 110 bis 150°C Siegeldruck 1,5 N/cm², Siegelzeit 0,5s, Siegelnahtfestigkeit in N/15mm** | | | | |
|---|---|---|---|---|---|---|---|---|---|---|
| | | | | | | 110°C | 120°C | 130°C | 140°C | 150°C |
| Beispiel 1 | DS I | 0,7 µm | **++** | 1,7% | 112 | | 0,47 | 0,50 | 0,59 | 0,80 |
| | DS II | 0,5 µm | | | 118 | | | | | |
| VB1 | DS I | 0,7 µm | **- -** | 1,4% | 120 | 0,57 | 1,23 | 1,94 | 2,50 | 2,64 |
| | DS II | 0,5 µm | | | 115 | | | | | |
| VB2 | DSI | 0,7 µm | **∘** | 1,1% | 122 | | | | 0,18 | 0,76 |
| | DS II | 0,5 µm | | | 148 | | | | | |
| VB3 | DS I | 0,7 µm | **-** | 1,3% | 128 | | 0,36 | 1,21 | 2,22 | 2,47 |
| | DS II | 0,5 µm | | | 134 | | | | | |

| | | | | | | | | | | |
|---|---|---|---|---|---|---|---|---|---|---|
| DS = Deckschicht VB = Vergleichsbeispiel | | | | | | | | | | |

## Patentansprüche

1. Peelfähige Polyolefin-Mehrschichtfolie aus einer transparenten Basisschicht und einer erste Deckschicht I und einer zweiten siegelfähigen Deckschicht II, **dadurch gekennzeichnet, daß**
(I) die erste Deckschicht I eine Mischung aus
(a) mindestens einem Propylen-Copolymeren aus Propylen und Ethylen oder Butylen-Einheiten und/oder Propylen-Terpolymeren I aus Propylen, Ethylen und Butylen-Einheiten und
(b) mindestens ein Ethylen-Butylen-Copolymer
enthält und die Oberfläche dieser Deckschicht I eine Rauheit Rz von 0,1 bis <2µm bei einem cut-off von 0,25mm, gemessen nach ISO4287, aufweist und
(II) die zweite siegelfähige Deckschicht II eine Mischung aus
(a) einem Propylenhomopolymeren und
(b) einem Propylen-Copolymeren II mit einer Siegelanspringtemperatur von 105 bis 135°C enthält.
und die Folie bei einer Siegelung der Deckschicht I gegen die Deckschicht II mit einem Siegeldruck von 1,5N/cm² und einer Siegelzeit von 0,5s in einem Temperaturbereich von 120 bis 150°C Siegelnahtfestigkeiten in einem Bereich von 0,4 bis 1,5N/15mm aufweist.

2. Mehrschichtfolie nach Anspruch 1, **dadurch gekennzeichnet, daß** die Deckschicht I 70 bis 99 Gew.-% Propylen-Copolymer und/oder Propylen-Terpolymer und 1 bis 30 Gew.-% Ethylen-Butylen-Copolymer enthält.

3. Mehrschichtfolie nach einem oder mehreren der Ansprüche 1 bis 2, **dadurch gekennzeichnet, daß** das Ethylen-Butylen-Copolymer 1 bis 8 Gew.-%, bezogen auf das Polymer, Butyleneinheiten enthält

4. Mehrschichtfolie nach einem oder mehreren der Ansprüche 1 bis 3, **dadurch gekennzeichnet, daß** das Ethylen-Butylen-Copolymer einen Schmelzpunkt von 50 bis 110°C aufweist.

5. Mehrschichtfolie nach einem oder mehreren der Ansprüche 1 bis 6, **dadurch gekennzeichnet, daß** die Deckschicht II 5 bis 20 Gew.-% des Propylen-Copolymeren II und 80 bis 95 Gew.-% des Propylenhomopolymeren enthält.

6. Mehrschichtfolie nach einem oder mehreren der Ansprüche 1 bis 5, **dadurch gekennzeichnet, daß** das Propylen-Copolymere II eine Propylen-Butylen Copolymer mit einem Butylenanteil von 5 bis 15 Gew.-% ist.

7. Verwendung einer Mehrschichtfolie nach einem oder mehreren der Ansprüche 1 bis 6 zur Herstellung einer Verpackung, **dadurch gekennzeichnet, daß** die Siegelung der Deckschicht I gegen die Deckschicht II erfolgt.

8. Verwendung nach Anspruch 7, **dadurch gekennzeichnet, daß** die Siegelung der Deckschicht I gegen die Deckschicht II bei einem Siegeldruck von 1,5N/cm² und einer Siegelzeit von 0,5s in einem Temperaturbereich von 120 bis 150°C erfolgt.

9. Verwendung nach Anspruch 8, **dadurch gekennzeichnet, daß** die Siegelnahtfestigkeiten der Siegelung der Deckschicht I gegen die Deckschicht II in einem Bereich von 0,4 bis 1,5N/15mm liegt.

10. Verpackung enthaltend eine Mehrschichtfolie nach einem oder mehreren der Ansprüche 1 bis 6, **dadurch gekennzeichnet, daß** die Verpackung eine Überlappungsnaht aufweist bei der die Deckschicht I gegen die Deckschicht II gesiegelt ist.

## Claims

1. A peelable polyolefin multi-layer film made of a transparent base layer and a first cover layer I and a second sealable cover layer II, **characterized in that**
(I) the first cover layer I contains a mixture of
(a) at least one propylene copolymer composed of propylene and ethylene or butylene units and/or propylene terpolymers I composed of propylene, ethylene and butylene units and
(b) at least one ethylene-butylene copolymer and the surface of this cover layer I has a roughness Rz of 0.1 to < 2 µm with a cut-off of 0.25 mm, measured according to ISO4287, and
(II) the second sealable cover layer II contains of a mixture of
(a) a propylene homopolymer and
(b) a propylene copolymer II having a seal initiation temperature of 105 to 135°C
and the film has seal seam strengths in a range from 0.4 to 1.5 N / 15 mm when the cover layer I is sealed against the cover layer II at a sealing pressure of 1.5 and a sealing time of 0.5 s in a temperature range from 120 to 150°C.

2. The multi-layer film according to claim 1, **characterized in that** the cover layer contains 70 to 99% by weight of propylene copolymer and/or propylene terpolymer and 1 to 30% by weight of ethylene-butylene copolymer.

3. The multi-layer film according to any one or more of claims 1 to 2, **characterized in that** the ethylene-butylene copolymer contains 1 to 8% by weight, based on the polymer, of butylene units.

4. The multi-layer film according to any one or more of claims 1 to 3, **characterized in that** the ethylene-butylene copolymer has a melting point of 50 to 110°C.

5. The multi-layer film according to any one or more of claims 1 to 6, **characterized in that** the cover layer II contains 5 to 20% by weight of the propylene copolymer II and 80 to 95% by weight of the propylene homopolymer.

6. The multi-layer film according to any one or more of claims 1 to 5, **characterized in that** the propylene copolymer II is a propylene-butylene copolymer having a butylene content of 5 to 15% by weight.

7. A use of a multi-layer film according to any one or more of claims 1 to 6 for producing packaging, **characterized in that** the cover layer I is sealed against the cover layer II.

8. The use according to claim 7, **characterized in that** the sealing of the cover layer I against the cover layer II takes place at a sealing pressure of 1.5 and a sealing time of 0.5 s in a temperature range from 120 to 150°C.

9. The use according to claim 8, **characterized in that** the seal seam strengths of the seal of the cover layer I against the cover layer II is in a range from 0.4 to 1.5 N / 15 mm.

10. A packaging containing a multi-layer film according to any one or more of claims 1 to 6, **characterized in that** the packaging has an overlap seam in which the cover layer I is sealed against the cover layer II.

## Revendications

1. Feuille multicouche en polyoléfine qui est pelable et qui est constituée d'une couche de base transparente et d'une première couche de couverture I et d'une seconde couche de couverture II laquelle est apte au scellement, **caractérisée en ce que**
(I) la première couche de couverture I contient un mélange de
(a) au moins un copolymère de propylène constitué d'unités de propylène et d'éthylène ou de butylène et/ou un terpolymère de propylène I constitué d'unités de propylène, d'éthylène et de butylène, et
(b) au moins un copolymère d'éthylène-butylène la surface de cette couche de couverture I présente une rugosité Rz de 0,1 à < 2 µm, la valeur d'exclusion étant de 0,25 mm, lorsque la mesure est réalisée selon ISO 4287, et
(II) la seconde couche de couverture II, apte au scellement, contient un mélange de
(a) un homopolymère de propylène et
(b) un copolymère de propylène II dont la température d'activation du scellement est comprise entre 105 et 135 °C.
et ladite feuille présentant, lorsque le scellement de la couche de couverture I contre la couche de couverture II est réalisé à une pression de scellement de 1,5 et pendant une durée de scellement de 0,5 s, des valeurs de résistance du joint de scellement comprises entre 0,4 et 1,5 N / 15 mm dans une gamme de températures allant de 120 à 150 °C.

2. Feuille multicouche selon la revendication 1, **caractérisée en ce que** la couche de couverture I contient 70 à 99 % en poids de copolymère de propylène et/ou de terpolymère de propylène et 1 à 30 % en poids de copolymère d'éthylène-butylène.

3. Feuille multicouche selon une ou plusieurs des revendications 1 à 2, **caractérisée en ce que** le copolymère d'éthylène-butylène contient 1 à 8 % en poids d'unités de butylène, par rapport audit polymère.

4. Feuille multicouche selon une ou plusieurs des revendications 1 à 3, **caractérisée en ce que** le copolymère d'éthylène-butylène présente un point de fusion compris entre 50 et 110 °C.

5. Feuille multicouche selon une ou plusieurs des revendications 1 à 6, **caractérisée en ce que** la couche de couverture II contient 5 à 20 % en poids du copolymère de propylène II et 80 à 95 % en poids dudit homopolymère de propylène.

6. Feuille multicouche selon une ou plusieurs des revendications 1 à 5, **caractérisée en ce que** le copolymère de propylène II est un copolymère de propylène-butylène dont la proportion de butylène est comprise entre 5 et 15 % en poids.

7. Utilisation d'une feuille multicouche selon une ou plusieurs des revendications 1 à 6 pour fabriquer un emballage, **caractérisée en ce que** la couche de couverture I est scellée contre la couche de couverture II.

8. Utilisation selon la revendication 7, **caractérisée en ce que** le scellement de la couche de couverture I contre la couche de couverture II est réalisé à une pression de scellement de 1,5 et pendant une durée de scellement de 0,5 s, dans une gamme de températures allant de 120 à 150 °C.

9. Utilisation selon la revendication 8, **caractérisée en ce que** le scellement de la couche de couverture I contre la couche de couverture II donne lieu à des valeurs de résistance du joint de scellement comprises entre 0,4 et 1,5 N/15 mm.

10. Emballage contenant une feuille multicouche selon une ou plusieurs des revendications 1 à 6, **caractérisé en ce que** ledit emballage présente un joint à chevauchement réalisé par scellement de la couche de couverture I contre la couche de couverture II.
